# EUROPÄISCHE PATENTSCHRIFT

(11) **EP 0 547 537 B1**
(45) Veröffentlichungstag und Bekanntmachung des Hinweises auf die Patenterteilung: **22.05.1996**
(21) Anmeldenummer: 92121225.4
(22) Anmeldetag: 12.12.1992
(51) Int. Cl.: B60R 16/02, B60S 1/02

(54) **Mehrstellungsschalter in Kraftfahrzeugen**
Multiposition switch for motor vehicles
Commutateur à positions multiples pour véhicules

(30) Priorität: 18.12.1991 DE 4141715
(43) Veröffentlichungstag der Anmeldung: 23.06.1993
(73) Patentinhaber: Bayerische Motoren Werke Aktiengesellschaft, 80788 München (DE)
(72) Erfinder: Kagleder, Erich, W-8235 Piding (DE); Wagner, Armin, W-8031 Gernlinden (DE)

(56) Entgegenhaltungen:
- DE-A- 3 008 580
- DE-A- 3 615 531

## Beschreibung

Die Erfindung bezieht sich auf einen Mehrstellungs-Schalter in Kraftfahrzeugen nach dem Oberbegriff des Patentanspruchs 1.

Ein derartiger Schalter ist im Prinzip aus der DE-0S 3615531 bekannt. Daraus geht eine 1:1 Zuordnung der möglichen Stellungen des Schalters und der davon gesteuerten Zustände des Steuergeräts hervor. Im Falle von zwei Signalleitungen lassen sich beispielsweise vier Zustände des Steuergeräts und damit vier Betriebsarten ansteuern. Ist es erforderlich fünf Zustände anzusteuern, so kann dies bei der bekannten Anordnung nur mit Hilfe einer zusätzlichen Leitung erfolgen, wodurch die Zahl der Steuerleitungen um 50 %, vergrößert wird. Daraus ergibt sich gerade im Hinblick auf die zunehmende in den Vordergrund tretende Notwendigkeit, mit möglichst geringem Leitungsaufwand die Steuerfunktionen in einem Kraftfahrzeug darzustellen, ein erhebliches Gewichts- und Kostenproblem.

Der Erfindung liegt die Aufgabe zugrunde, einen Mehrstellungs-Schalter der eingangs genannten Art so weiterzubilden, daß ohne zusätzlichen Leitungsaufwand die Zahl der Steuermöglichkeiten vergrößert ist.

Die Erfindung löst diese Aufgabe durch die kennzeichnenden Merkmale des Patentanspruchs 1.

Wesentlich bei der Erfindung ist, daß ein weiterer Zustand sich ohne zusätzlichen Leitungsaufwand darstellen läßt. Die Grundüberlegung hierzu besteht darin, daß dieser Zustand durch die unmittelbar vorhergehende Einstellung des Schalters geprägt und von dem anderen, hinsichtlich der Codierung identischen Zustand unterscheidbar ist. Für den angenommenen Fall von zwei Signalleitungen ergeben sich damit insgesamt fünf Zustände, die in fünf verschiedenen Stellungen des Schalters angesteuert werden können. Anwendungsfälle der Erfindung sind die weiter unten angegebenen Möglichkeiten zur Ansteuerung einer Scheiben-Reinigungsanlage, der Beleuchtungsanlage bzw. einer Elektromotorsteuerung zum Antrieb eines elektrisch verstellbaren Konstruktionselements.

Gerade bei diesen Anwendungen ist die Erweiterung der Zahl der Zustände von 4 auf 5 besonders vorteilhaft, da dann die vorgesehenen Zustände vollständig abgedeckt sind.

Eine Weiterbildung der Erfindung beschäftigt sich mit einem Sicherheitsaspekt. Dabei wird davon ausgegangen, daß sich bei einem anormal schnellen Stellungswechsel des Schalters die Zustände nicht in jedem Fall verändern lassen. Um in einem derartigen Fall nicht die falsche Betriebsart anzusteuern, ist vorgesehen, die unmittelbar vorausgehende Stellung nur dann zu berücksichtigen, wenn sich der Schalter eine Mindestschaltzeit in dieser Stellung befindet. Darunter ist beispielsweise ein Zeitraum von 10msec zu verstehen. Nimmt der Schalter den vorausgehenden und für die Auswahl der beiden möglichen Zustände maßgeblichen Zustand für eine kürzere Zeit ein, so wird in einem derartigen Fall keiner der beiden Zustände angesteuert. Damit lassen sich auch Probleme beseitigen, die bei einer fehlerhaften Codeübermittlung, beispielsweise durch interne Bordnetzstörungen verursacht, entstehen können.

Die Anwendungsmöglichkeiten der Erfindung sind, wie bereits erwähnt, zahlreich. Es ist beispielsweise möglich, die Erfindung zur Ansteuerung einer Scheiben-Reinigungsanlage einzusetzen. Der für sich betrachtet zweideutige Zustand kann beispielsweise der Betrieb der Scheibenwaschpumpe sein, der dem zunächst eingestellten und durch die vorhergehende Stellung des Mehrstellungs-Schalters bestimmten Betrieb der Scheiben-Wischeranlage überlagert ist. Es ist dann möglich, die Scheibenwaschpumpe der Betriebsart I (Dauerbetrieb) bzw. II (Dauerbetrieb mit erhöhter Wischergeschwindigkeit) des Scheibenwischers zuzuschalten.

Diese Ausführungsform der Erfindung ist charakterisiert durch eine Zusatzfunktion, die einer eingestellten Grund-Funktion des Steuergeräts überlagert ist. Wesentlich dabei ist, daß im Steuergerät nur die Information über die Zusatzfunktion vorliegt, währenddessen eine Information über die Grund-Funktion nicht zur Verfügung steht.

Alternativ kann es sich aber auch um eine weitere Funktion handeln, die eigenständigen Charakter besitzt. Anwendungsfälle hierfür sind beispielsweise ein sogenannter Mautbetrieb eines Fensterhebers bzw. Schiebedachs, bei dem durch eine kurzzeitigen Einstellung der vierten Stellung des Schalters ein Dauerbetrieb des bewegten Teils ausgelöst ist. Der Mehrstellungs-Schalter befindet sich dabei z. B. in seiner Ruhestellung, nachdem der Mautbetrieb durch Einstellen des Mehrstellungs-Schalters in der für sich zweideutigen Stellung ausgelöst wurde. Der Mautbetrieb der Fensterscheibe bzw. des Schiebedachs ist in beiden Richtungen möglich. Die Unterscheidung erfolgt durch Berücksichtigung der vorhergehenden Betriebsart, bei der das zu bewegende Teil bereits in der jeweiligen Richtung bewegt wurde, solange der Mehrstellungs-Schalter währenddessen die zugehörige Stellung einnahm.

In der Zeichnung sind Ausführungsbeispiele der Erfindung dargestellt. Es zeigt
- Fig. 1: einen Mehrstellungs-Schalter gemäß der Erfindung in Anwendung auf ein Scheibenreinigungs-Steuergerät und
- Fig. 2: einen weiteren Mehrstellungs-Schalter in Anwendung auf einen Fensterheber-Antrieb.

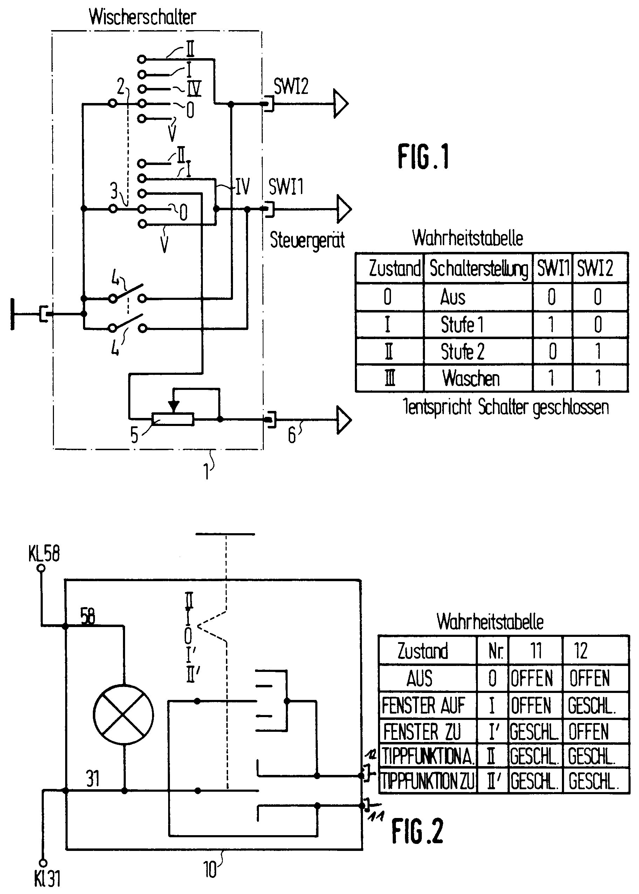

Beim Ausführungsbeispiel von Fig. 1 dient ein Mehrstellungs-Schalter 1 dazu, fünf verschiedene Zustände einer Scheiben-Reinigungsanlage eines Kraftfahrzeugs (nicht dargestellt) anzusteuern. Der Schalter 1 besitzt zwei gekoppelte Schaltkontakte 2 und 3, die in mit 0, I und II bezeichneten Stellungen einstellbar sind und die zusammen mit einer weiteren Schaltstellung III einen aus 2²-Bit bestehenden Code liefert, der insgesamt vier Möglichkeiten beinhaltet.

Diese sind in einer Wahrheitstabelle dargestellt, in der den vier möglichen Stellungen (Codierungen) 0 bis III des Schalters 1 die angesteuerten Funktionen Aus, Stufe 1, Stufe 2 sowie Wasch-Betrieb gegenübergestellt sind. Daneben befinden sich in den beiden mit SWI1 und SWI2 bezeichneten Spalten die Potentialbelegung, die über zwei Steuerleitungen SWI1 und SWI2 an ein nicht dargestelltes Steuergerät als Digitalcodierung für die Stellungen des Schalters 1 weitergegeben werden. Dabei entspricht der Codierung 1 die Belegung mit Massepotential und der Codierung 0 das Fehlen einer Belegung.

Die Schaltstellung III kann unmittelbar anschließend an die eingestellte Schaltstellung I oder II eingestellt werden. Damit ergibt sich ein Waschbetrieb, d. h. ein Betrieb einer nicht dargestellten Scheibenwaschpumpe, der dem weiterhin beibehaltenen Scheibenwischerbetrieb überlagert ist. Es ist somit möglich, einen Waschbetrieb sowohl bei Stufe 1 als auch bei Stufe 2 des Scheibenwischers durchzuführen. Diese Unabhängigkeit der Einstellung der Schaltstellung III wird durch einen Doppelschaltkontakt 4 innerhalb des Schalters 1 erreicht, mit dem gleichzeitig auf den beiden Ausgängen SWI1 und SWI2 des Schalters 1 die Codierung "1" durch Anlegen von Massepotential eingestellt wird. Durch interne Programmierung des Steuergeräts, ggf. in Verbindung mit einem nicht dargestellten Speicherelement wird die Information über den vorausgehenden Zustand I oder II währenddessen beibehalten. Am Ende des Waschbetriebs wird der dann maßgebliche, ggf. geänderte Zustand eingestellt.

Ergänzend sind in Fig. 1 zwei weitere Besonderheiten des Schalters 1 dargestellt. Zum einen ist ein Intervall-Betrieb mit veränderlicher Intervall-Pause einstellbar. Hierzu kann ein Potentiometer 5 innerhalb des Schalters 1 vorgesehen sein, das über eine weitere Signalleitung 6 mit dem Steuergerät verbunden ist. Abhängig von dem manuell eingestellten Widerstand des Potentiometers 5 ergibt sich dann eine Variation der Pausenzeit. Das Potentiometer 5 ist dabei durch eine zusätzliche Stellung des Schalters 1 über einen der beiden Schaltkontakte dieses Schalters eingeschaltet. Sein Widerstand wird über die Signalleitung 6 dem Steuergerät mitgeteilt. Ferner ist es möglich, durch kurzzeitiges Einstellen einer weiteren Stellung V des Schalters 1 einen einmaligen Betrieb des Scheibenwischers hervorzurufen. Diese Funktion, allgemein unter der Bezeichnung Tippwischen bekannt, entspricht hinsichtlich ihrer schaltungsmäßigen Belegung der beiden Signalleitungen 2 und 3 der Stufe I mit der Folge, daß bei bleibender Einstellung der Stufe V ebenfalls die Stufe I des Wischbetriebs eingestellt wird.

Beim Ausführungsbeispiel von Fig. 2 wird mit Hilfe eines Schalters 10 der nicht dargestellte Antriebsmotor eines Fensterhebers angesteuert. Der Schalter 10 ist ebenfalls als Doppelkontakt-Schalter ausgebildet und besitzt 5 Schaltstellungen. Ausgehend von einer Neutralstellung "0", in der der Antriebsmotor nicht eingeschaltet ist, kann die Aufwärts- bzw. Abwärtsbewegung des Fensters gesteuert werden. Hierzu dient eine Stellung I des Schalters 10, bei der eine Aufwärtsbewegung des Fensters durchgeführt wird, solange diese Stellung eingeschaltet ist. Entsprechend dient eine Stellung I' dazu, das Fenster in seine Öffnungsstellung zu verfahren, solange diese Stellung eingestellt ist.

Zusätzlich bietet der Schalter 10 die Möglichkeit, einen Mautbetrieb des Fensters durchzuführen. Dies kann sowohl in der Öffnungs- als auch in der Schließrichtung erfolgen. Hierzu ist es lediglich erforderlich, den Schalter 10 kurzzeitig in die sich an die Stellung I bzw. I' bewegungsmäßig anschließende Stellung II bzw. II' einzustellen. Nach kurzzeitigem Einstellen der Stellung II bzw. II' kann der Schalter 10 in seine Ausgangslage "0" zurückkehren. Das nicht dargestellte Steuergerät führt selbsttätig die Bewegung des Fensters in seine jeweilige Endlage durch.

Wesentlich dabei ist, daß sich die beiden Schaltstellungen II und II' hinsichtlich ihrer potentialmäßigen Bewegung an den beiden Signalleitungen 11 und 12 nicht unterscheiden. In beiden Fällen liegt das Potential "1" auf den beiden Leitungen. Innerhalb des Steuergeräts sorgt dabei eine Logik dafür, daß aufgrund des vorhergehenden Zustands I bzw. I' der sich logischerweise daran anschließende Zustand II bzw. II' eingestellt wird. Zur Kompensation eventueller Störungen ist dabei mit Hilfe eines Zeitschaltglieds dafür gesorgt, daß der vorausgehende Zustand nur dann berücksichtigt wird, wenn er länger als eine vorgegebene Schaltzeit von beispielsweise 10 msec eingestellt ist.

Selbstverständlich ist dafür gesorgt, daß das kurzzeitige Einstellen des Zustands I bzw. I', das beim Zurückführen des Schalters aus der Stellung II bzw. II' in seine Ausgangslage "0" erfolgt, ohne Auswirkungen auf die selbsttätige Bewegung des Fensters in seiner Endlage ist. Auch dies kann mit Hilfe eines Zeitschaltglieds erfolgen, bei dem der Zustand I bzw. I' nur dann berücksichtigt wird, wenn er länger als eine vorgegebene Schaltzeit, beispielsweise 10 msec, vorliegt.

Wie bei Fig. 1 ist bei Fig. 2 eine Wahrheitstabelle angegeben, in der die potentialmäßige Belegung der beiden Ausgänge des Schalters 10, der mit den Steuerleitungen 11 und 12 verbunden sind, sowie der zugehörige Betrieb des Fenster-Antriebsmotors wiedergegeben sind. Nicht dargestellt sind zusätzliche mechanische Mittel, mit denen die beschriebene Maut-Funktion von dem normalen Betriebszustand I bzw. I' des Antriebsmotors unterschieden werden. Hierzu kann ein Überdruckkontakt innerhalb des Schalters 10 vorgesehen sein, der zum Einstellen der Schalterstellungen I bzw. I'- zu betätigen ist.

Wie bei Figur 1 ist es hier möglich, mit Hilfe von zwei Signalleitungen ein codiertes Einstellungssignal des Schalters 10 für insgesamt fünf Betriebsarten über zwei Signalleitungen zu übertragen.

## Patentansprüche

1. Mehrstellungs-Schalter (2, 3) in Kraftfahrzeugen, dessen 2ⁿ Stellungen über n-Signalleitungen (SWI1, SWI2, 11/12) zur Steuerung von 2ⁿ Zuständen (Betriebsart) an ein Steuergerät als digitale Stellungssignale aufgebbar sind, dadurch gekennzeichnet, daß mittels des Schalters ein weiterer Zustand ansteuerbar ist, zu dessen Ansteuerung die potentialmäßige Belegung der Signalleitungen identisch mit der einem anderen Zustand zugeordneten Belegung ist und daß die beiden Zustände durch die voneinander unterscheidbare potentialmäßige Belegung der Steuerleitungen für die beiden unmittelbar davor eingestellten Zustände unterscheidbar sind.

2. Schalter nach Anspruch 1, dadurch gekennzeichnet, daß die unmittelbar vorausgehende Stellung nur zu berücksichtigen ist, wenn der Schalter eine Mindestschaltzeit in dieser Stellung verweilt.

3. Schalter nach Anspruch 1 oder 2, dadurch gekennzeichnet, daß der weitere Zustand eine ergänzende Betriebsart zu der unverändert beibehaltenen Betriebsart in der vorausgehenden Stellung des Schalters ist.

4. Schalter nach Anspruch 3, dadurch gekennzeichnet, daß der Schalter zur Ansteuerung einer Scheiben-Reinigungsanlage dient und der weitere Zustand der Betrieb einer Waschpumpe ist.

5. Schalter nach einem der Ansprüche 1 bis 4, dadurch gekennzeichnet, daß der weitere Zustand einer anderen Betriebsart zugeordnet ist.

## Claims

1. A multi-position switch (2, 3) for a motor vehicle, having 2ⁿ positions, which can be delivered by n signal lines (SWI1, SWI, 11/12) in the form of digital position signals to a control device for controlling 2ⁿ states (operating modes), characterised in that the switch can set an additional state for which the potential levels of the signal lines are identical with the levels associated with another state, and the two states are distinguishable by the different potential levels of the control lines for the two immediately previously set states.

2. A switch according to claim 1, characterised in that the immediately preceding position is taken into account only if the switch remains in this position for a minimum time.

3. A switch according to claim 1 or 2, characterised in that the additional state is a mode of operation in addition to the mode of operation retained unchanged in the previous position of the switch.

4. A switch according to claim 3, characterised in that the switch is for actuating a window-cleaning installation and the additional state is operation of a washing pump.

5. A switch according to any of claims 1 to 4, characterised in that the additional state is assigned to another mode of operation.

## Revendications

1. Commutateur à positions multiples (2, 3) pour véhicules automobiles, dont les 2ⁿ positions sont transmises par n lignes de transmission de signaux (SWl1, SWl2/11/12) pour commander 2ⁿ états (modes de fonctionnement) à un appareil de commande comme signaux numériques de position, caractérisé en ce que le commutateur permet de commander un autre état pour la commande duquel l'occupation du niveau de potentiel des lignes de transmission des signaux est identique à celle d'une occupation associée à un autre état et en ce que les deux états se différencient par l'occupation du niveau de potentiel différant des lignes de commande pour l'état qui avait été réglé immédiatement avant.

2. Commutateur selon la revendication 1, caractérisé en ce que la position qui précède directement n'est prise en compte que si le commutateur a séjourné dans cette position pendant un temps de commutation minimum.

3. Commutateur selon la revendication 1 ou 2, caractérisé en ce que l'autre état est un mode de fonctionnement complémentaire du mode de fonctionnement conservé inchangé et correspondant à la position précédente du commutateur.

4. Commutateur selon la revendication 3, caractérisé en ce qu'il sert à commander une installation de lave-glace et l'autre état commande le fonctionnement d'une pompe de liquide de lavage.

5. Commutateur selon l'une des revendications 1 à 4, caractérisé en ce que l'autre état est un autre mode de fonctionnement.
